(19) Europäisches Patentamt
European Patent Office
Office européen des brevets

(11) **EP 2 731 779 B1**

(12) **EUROPÄISCHE PATENTSCHRIFT**

(45) Veröffentlichungstag und Bekanntmachung des Hinweises auf die Patenterteilung:
**23.09.2015 Patentblatt 2015/39**

(21) Anmeldenummer: **12720212.5**

(22) Anmeldetag: **14.05.2012**

(51) Int Cl.:
*B29C 49/12* (2006.01)  *B29C 49/32* (2006.01)
*B29C 49/42* (2006.01)  *B29C 49/48* (2006.01)
*B29C 49/56* (2006.01)

(86) Internationale Anmeldenummer:
**PCT/EP2012/058898**

(87) Internationale Veröffentlichungsnummer:
**WO 2013/007421 (17.01.2013 Gazette 2013/03)**

(54) **BLASMASCHINE FÜR KUNSTSTOFFBEHÄLTER**

BLOW-MOULDING MACHINE FOR PLASTIC CONTAINERS

MACHINE DE MOULAGE PAR SOUFFLAGE POUR RÉCIPIENTS EN PLASTIQUE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **13.07.2011 DE 102011079077**

(43) Veröffentlichungstag der Anmeldung:
**21.05.2014 Patentblatt 2014/21**

(73) Patentinhaber: **KRONES Aktiengesellschaft 93073 Neutraubling (DE)**

(72) Erfinder: **WINZINGER, Frank
D-93073 Neutraubling (DE)**

(74) Vertreter: **Grünecker Patent- und Rechtsanwälte PartG mbB
Leopoldstraße 4
80802 München (DE)**

(56) Entgegenhaltungen:
**EP-A2- 1 060 865    EP-B1- 1 226 017
WO-A1-93/23232     DE-A1- 19 912 116
US-A- 3 415 916     US-A- 5 975 881**

**Beschreibung**

Die Erfindung betrifft eine Blasmaschine für Kunststoffbehälter nach dem Oberbegriff des Anspruchs 1.

Auf Blasmaschinen für Kunststoffbehälter sind bekanntermaßen mehrere Blasstationen mit Blasformen vorgesehen, wobei die Blasformen wenigstens zwei Blasformhälften umfassen, die zum Einführen eines Vorformlings und zum Entnehmen des fertig geblasenen Behälters geöffnet werden und zum Blasen des Behälters geschlossen werden. Üblicherweise sind zwei Blasformhälften vorgesehen, die eine durch die Hauptachse des zu blasenden Behälters verlaufende Trennebene aufweisen und mittels eines Schwenkmechanismus geöffnet und geschlossen werden können. Die einer Blaskavität zugeordneten Blasformhälften sind an einem gemeinsamen Formträger gelagert und müssen beim Öffnen zunächst beschleunigt und vor Erreichen der geöffneten Stellung wieder abgebremst werden. Ebenso müssen die Blasformhälften beim Schließen erneut beschleunigt und wiederum vor Erreichen der geschlossenen Stellung abgebremst werden. Eine Blasmaschine gemäß Oberbegriff des Anspruchs 1 ist aus US 5975881 bekannt.

Für die zugehörigen Beschleunigungs- und Abbremsrampen, also für die Dauer von Beschleunigungs- und Abbremsphasen, wird Prozesszeit verbraucht und eine vergleichsweise aufwendige Antriebssteuerung der Blasformhälften benötigt.

Zwar schlägt die EP 1 226 017 B1 eine verbesserte Blasmaschine nach dem Oberbegriff des Anspruchs 1 vor. Jedoch werden zur Kapazitätserhöhung radial verschiebbare Haltearme für die Formträger vorgeschlagen, deren Realisierung und Bewegungskoordination aufwändig ist.

Aufgabe der Erfindung ist es, eine Blasmaschine bereitzustellen, bei der für das Öffnen und Schließen der Blaskavitäten weniger Prozesszeit verbraucht wird und der Antrieb der Blasformhälften vereinfacht werden kann.

Die gestellte Aufgabe wird gelöst mit einer Blasmaschine nach Anspruch 1. Demnach sind die Mehrfachträger derart angetrieben, dass sich mittels einer kontinuierlichen Bewegung der Mehrfachträger wenigstens eine der Blaskavitäten öffnen lässt und sich gleichzeitig wenigstens eine andere der Blaskavitäten schließen lässt. Das heißt, die Mehrfachträger lassen sich bezüglich der übrigen Formträger und/oder eines gemeinsamen Maschinenunterbaus kontinuierlich bewegen, beispielsweise zwischen zwei Endpositionen, in denen jeweils andere Blaskavitäten geöffnet und geschlossen sind. Eine kontinuierliche Bewegungsphase dazwischen ermöglicht ein gleichzeitiges Öffnen und Schließen mit geringst möglicher Anzahl von Beschleunigungs- und Abbremsrampen. Es können somit kombinierte Bewegungsabläufe zum Schließen und Öffnen mehrerer Blaskavitäten mit minimalem Energie- und Zeitaufwand realisiert werden. Geeignete Antriebe lassen sich mit beispielsweise mit Servomotoren und/oder Kurvensteuerungen realisieren. Entscheidend ist eine kontinuierliche Relativbewegung zwischen den Formträgern, bei der ein Stopp während des Beladens mit Vorformlingen und des Entnehmens der geblasenen Behälter, wie beispielsweise Flaschen, vermieden wird.

Während der kontinuierlichen Bewegung kann es zu Beschleunigungen und Verzögerungen des Formträgers kommen. Insbesondere weist die Ableitung der Funktion der zurückgelegten Strecke über die Zeit während einer Bewegung des Formträgers vom Öffnen einer Kavität bis zum Schließen einer anderen Kavität immer das gleiche Vorzeichen auf, mit Ausnahme der beiden Endpositionen, an denen die Ableitung der Funktion gleich Null ist. Das Bezugssystem hierfür bildet entweder das Maschinengestell oder, falls die Formträger auf einem rotierenden Blasrad angeordnet sind, das Blasrad.

Bei einer günstigen Ausgestaltung ist wenigstens ein Formträger linear verschiebbar gelagert, um gleichzeitig eine erste Gruppe von Blaskavitäten zu schließen und eine zweite Gruppe von Blaskavitäten zu öffnen. Dadurch lassen sich stationäre Blasmaschinen mit besonders effizienter Prozesszeitausnutzung realisieren. Beispielsweise können die Formträger linear in einer Reihe angeordnet werden, um jeden zweiten Formträger jeweils gleichsinnig auf einen benachbarten Formträger zu zu bewegen und von dem anderen benachbarten Formträger wegzubewegen.

Vorzugsweise sind die Formträger drehbar gelagert, um gleichzeitig eine erste Gruppe von Blaskavitäten zu schließen und eine zweite Gruppe von Blaskavitäten zu öffnen. Das kontinuierliche Öffnen und Schließen von Blaskavitäten durch Drehen oder Schwenken der Formträger lässt sich konstruktiv besonders einfach realisieren. Die erste und die zweite Gruppe von Blaskavitäten können aus einer beliebigen Anzahl von Blaskavitäten bestehen. Möglich ist auch, dass nur jeweils eine einzelne Blaskavität geöffnet und nur eine einzelne weitere Blaskavität gleichzeitig geschlossen wird.

Bei einer besonders günstigen Ausführungsform sind die Formträger als Doppelträger zum Tragen von zwei voneinander wegweisenden Blasformhälften ausgebildet. Dadurch lässt sich eine kombinierte und kontinuierliche Bewegung zum Öffnen einer Blaskavität und zum Schließen wenigstens einer weiteren Blaskavität besonders einfach durchführen. Durch Bewegen des Doppelträgers in Richtung eines weiteren Formträgers kann eine Blaskavität zwischen diesem Formträger und dem Doppelträger geschlossen werden. Gleichzeitig kann eine Blaskavität zwischen der zweiten Blasformhälfte des Doppelträgers und einem weiteren Formträger geöffnet werden.

Vorzugsweise ist wenigstens einer der Formträger der Blasmaschine stationär. Dadurch lässt sich der mechanische Aufwand zum Öffnen und Schließen der Blaskavitäten reduzieren. Unter stationär ist hierbei eine stationäre Anordnung bezüglich eines Maschinenunterbaus oder -gestells zu verstehen. Somit lassen sich aktiv betriebene Komponenten, wie beispielsweise Ventile, Motoren und dergleichen auf besonders einfache Weise im Bereich des stationären Formträgers anordnen.

Vorzugsweise ist an dem stationären Formträger ferner eine Blasdüse zum Abdichten des Behälters, beispielsweise einer Flasche, gegenüber der Umgebung und/oder eine Reckstange zum Dehnen der Vorformlinge in ihre Längsachse und/oder ein Druckkissen zum Zusammenpressen der Blasformen gegeneinander bzw. zur Kompensation des nach außen wirkenden Blasdrucks innerhalb des Behälters vorgesehen. Dadurch lässt sich eine besonders robuste und zuverlässige Blasmaschine realisieren. Gleichzeitig wird das Zuführen von Druckluft vereinfacht.

Die Kavitäten zwischen zwei Formträgern können während der Eingabe der Vorformlinge stationär sein, um präzise Übergaben und Übernahmen von Vorformlingen oder Behältern zu gewährleisten, sie können aber auch während der Übergabevorgänge bewegt werden, um eine möglichst hohe Auslastung der Blasmaschine sicherzustellen.

Insbesondere kann eine Eingabe von Vorformlingen in die Kavität auch in Richtung der Blasformlängsachse erfolgen. Dadurch muss die sich schließende Kavität nicht eine seitliche Eingabe, an den Blasformhälften vorbei, abwarten. Folglich ist das Zuführsystem unabhängiger vom Zustand des Formträgersystems, was die Produktivität der Blasmaschine steigern kann. Es ist somit auch eine Eingabe in eine umfänglich bereits geschlossene Kavität möglich.

Bei einer besonders günstigen Ausführungsform können zumindest zwei der Formträger in einer Blasstellung, in der sie gemeinsam eine Blaskavität schließen, bewegt werden. Dadurch lässt sich während des Blasvorgangs eine kontinuierliche Bewegung zum Öffnen und/oder Schließen von weiteren an der Blasmaschine vorgesehenen Blaskavitäten durchführen. Somit lässt sich die Prozesszeit der Blasmaschine besonders effizient nutzen.

Vorzugsweise sind zumindest zwei Mehrfachträger vorgesehen, die unabhängig voneinander bewegbar sind. Dadurch können kontinuierliche Bewegungsabläufe zum Öffnen und Schließen von Blasformen und zum Blasen der einzelnen Behälter besonders vielfältig realisiert werden. Vorzugsweise sind die Mehrfachträger dabei auf einzeln angetriebenen Fahrzeugen gelagert, die insbesondere mittels magnetischer Kraftkopplung angetrieben sind. Dadurch lassen sich unterschiedliche lineare oder gekrümmte Bewegungsabläufe beim Öffnen, Schließen und Blasen der einzelnen Behälter kombinieren. Eine magnetische Kraftkopplung eignet sich besonders für Transportsysteme, bei denen aktive Antriebskomponenten in Schienen oder dergleichen vorgesehen sind, und bei denen die Fahrzeuge mit reaktiven, insbesondere passiven Antriebskomponenten, wie beispielsweise Permanentmagneten ausgerüstet sind. Dadurch können flexible und modulare Antriebssysteme verwirklicht werden.

Vorzugsweise sind wenigstens zwei Mehrfachträger vorgesehen, die fest aneinander gekoppelt und gemeinsam angetrieben sind. Damit kann die Anzahl der notwendigen Antriebssysteme minimiert werden, um eine konstruktiv besonders einfache und kostengünstige Blasmaschine zur realisieren. Als Antrieb eignen sich beispielsweise Servomotoren, Pneumatikzylinder oder Linearmotoren. Insbesondere bilden die wenigstens zwei aneinander gekoppelten Mehrfachträger nicht miteinander eine Kavität aus sondern jeweils mit anderen Formträgern.

Die Blasmaschine kann insbesondere auch in einem Reinraum betrieben werden. Wenn dies der Fall ist, befinden sich insbesondere die Antriebe für das Transportsystem oder die Formträger außerhalb des Reinraums. Kraftübertragungsmittel in den Reinraum werden dabei über herkömmliche Dichtungsmaßnahmen wie Faltenbälge, Gummidichtungen, hydraulische Dichtungen, z. B. Wasserschlösser oder Dampfsperren abgeschirmt. Alternativ können magnetische Kraftübertragungsmittel vorgesehen sein, welche auch innerhalb des Reinraums angeordnet sein können.

Bei einer weiteren vorteilhaften Ausführungsform sind die Blasformhälften um 180° zueinander gekippt. Dies ermöglicht eine besonders Platz sparende Bauweise und eine besonders effiziente Ausnutzung der Prozesszeit. Insbesondere befindet sich auf einem Mehrfachträger eine Blasformhälfte, deren Mündung, insbesondere lotrecht, nach unten ausgerichtet ist, und eine Blasformhälfte, deren Mündung entgegengesetzt, insbesondere lotrecht, nach oben ausgerichtet ist. Diese Ausführungsform ist besonders bei sich verjüngenden Behälterformen, beispielsweise kegelförmigen oder pyramidenförmigen Formen von Vorteil, kann aber auch den Zu- bzw. Abtransport von Vorformlingen oder Behältern erleichtern, da unterschiedlichen Greifern des Transportsystems auf diese Weise mehr Platz zur Verfügung steht.

Falls ein Druckkissen zum Einsatz kommt, ist dieses zwischen Formträger und Blasformhälfte angeordnet. Bei einem Mehrfachformträger ist es denkbar, alle Druckkissen über einen gemeinsamen Kanal mit Druckmedium zu versorgen. Ein Ventil zum Zuschalten des Drucks kann dabei den Blasdruck für alle Blasformhälften gleichzeitig zuschalten. Es ist aber auch möglich jeder Kavität oder Blasformhälfte ein eigenes Ventil zuzuordnen, insbesondere falls nicht alle Blasformhälften gleichzeitig eine Kavität bilden, in der ein Behälter geblasen wird. Auf diese Weise kann mit Luft zu befüllender Totraum bei nicht im Einsatz befindlichen Blasformhälften eingespart werden.

Bei einer weiteren günstigen Ausführungsform ist der Mehrfachträger von wenigstens drei Blasformhälften ausgebildet und drehbar gelagert, und insbesondere als Planetenrad ausgebildet, um die unterschiedlichen Blaskavitäten zu schließen. Damit lässt sich eine quasikontinuierliche Betriebsweise bei einer stationären Blasmaschine realisieren.

Eine besonders günstige Ausführungsform der Erfindung umfasst ferner eine Verriegelungseinrichtung zum Verriegeln der Mehrfachträgers an wenigstens einem benachbarten Formträger. Dadurch lässt sich die Bewegung zum Öffnen und Schließen einzelner Blaskavitäten von einem Bewegungsablauf zum Verriegeln der Mehrfachträger entkoppeln. Insbesondere eignet sich die erfindungsgemäße Verriegelungseinrichtung zum abwechselnden Verriegeln des Mehrfachträgers an unterschiedlichen benachbarten Formträgern. Es lassen sich somit unterschiedliche Blaskavitäten durch Verriegeln des Mehrfachträgers an unterschiedlichen Positionen realisieren.

Die Verrieglungseinrichtung erzeugt dabei insbesondere einen Formschluss zwischen zwei oder mehreren Formträgern. Sie kann als Haken, beispielsweise wie bei der Druckschrift EP 1535719 B1, als drehbare Welle, wie beispielsweise bei der Druckschrift DE 20007429, oder als mehrere Formträgerhälften umgreifende konisch zulaufende oder schräge, insbesondere V-förmige Ummantelung oder Klammer ausgebildet sein. Insbesondere kann die Verriegelung derart ausgebildet sein, dass sie dem Blasdruck innerhalb der Behälter durch ein aktives Zuhalten über einen Kniehebel und/oder einen während des Blasvorgangs ständig wirkenden Antrieb wie einen Pneumatikzylinder entgegenwirkt.

Vorzugsweise umfasst die Blasmaschine ferner eine Übergabeeinrichtung, an der Doppelgreifer zum Greifen eines Vorformlings und eines geblasenen Behälters vorgesehen sind. Dadurch ist es möglich, sowohl die Vorformlinge als auch die geblasenen Behälter mit Hilfe einer einzelnen Übergabeeinrichtung, wie beispielsweise einem Transfersternrad, an die Blasmaschine zu übergeben oder aus dieser zu entnehmen. Vorzugsweise umfasst der Doppelgreifer zwei getrennt steuerbare Greifeinheiten zum Greifen der Vorformlinge und der geblasenen Behälter. Dadurch können die Übergabebewegungen der Vorformlinge und der geblasenen Behälter voneinander entkoppelt werden. Insbesondere ist es möglich, einen Vorformling mit einer Greifeinheit des Doppelgreifers in eine geöffnete Blaskavität zu übergeben und einen fertig geblasenen Behälter mit der zweiten Greifeinheit des Doppelgreifers aus einer benachbarten geöffneten Blaskavität zu entnehmen. Dadurch lässt sich der Übergabevorgang besonders effizient, d.h. in einem besonders kleinen Maschinenwinkelbereich der Blasmaschine, durchführen.

Vorzugsweise ist eine Übergabeeinrichtung vorgesehen, bei der Greifer für Vorformlinge und/oder geblasene Behälter auf einzeln angetriebenen Fahrzeugen gelagert sind. Dies ermöglicht eine besonders flexible Übergabe während der kontinuierlichen Bewegung der Formträger.

Insbesondere sind die Antriebe des Formträgersystems und des Übergabesystems über eine Steuerung miteinander verbunden, um eine genaue Koordination der Bewegungsabläufe zu gewährleisten. Insbesondere ist an eine Regelung gedacht, bei der die Zeiten zum Blasen von einzelnen Behältern nicht nur vorgegeben werden, sondern für jede einzelne Kavität geregelt werden. Hier können Sensoren, wie beispielsweise Drucksensoren und/oder Durchflussmesser für die Blasluft, vorgesehen sein, die das Fertigstellen eines Behälters überwachen.

Allgemein ist es bei der Blasformmaschine möglich, dass die Behälter und/oder Vorformlinge kontinuierlich vom Übergabe- und Transportsystem transportiert werden. Während des Blasvorgangs können die Behälter kontinuierlich, insbesondere auf einem rotierenden Blasrad, transportiert werden oder sich in einer stationären Kavität befinden. Ein taktweises Transportieren oder Blasen kann bei bestimmten Ausführungsformen günstig sein. Ebenfalls sind Mischformen des Transports denkbar.

Bei einer besonders günstigen Ausführungsform weisen die Blasformhälften einander entsprechende Trennebenen auf, an denen jeweils zwei Blasformhälften aneinander geführt werden können, und es sind Trennebenen desselben Mehrfachträgers zueinander parallel angeordnet, so dass die zugehörigen Blasformhälften voneinander weg weisen, oder zueinander unter einem Winkel gleich 180° (x - 2) / x, wobei x die Anzahl der Blasformhälften pro Mehrfachträger bezeichnet. Diese Gleichung gilt für eine Anzahl von wenigstens drei Blasformhälften pro Mehrfachträger. Der eingeschlossene Winkel wird von den Trennebenen selbst oder gedachten Verlängerungslinien der Trennebenen gebildet. Bei zwei Blasformhälften weisen die Trennebenen insbesondere voneinander weg.

Vorzugsweise weisen die Blasformhälften einander entsprechende Trennebenen auf, an denen jeweils zwei Blasformhälften aneinander geführt werden können, und die Blasformhälften sind an den Mehrfachträgern jeweils in einer zueinander gleichbleibenden Lage angeordnet, wobei insbesondere Trennebenen desselben Mehrfachträgers jeweils einen Winkel ungleich Null einschließen.

An einem Mehrfachträger kann eine beliebige Anzahl von Blasformhälften vorgesehen sein, welche mit anderen Blasformhälften an anderen Trägern verschiedene Kavitäten ausbilden können. Hierbei wird die Fläche einer Blasformhälfte, an der sie zur Bildung einer Kavität mit einer anderen Blasformhälfte zusammengeführt wird, dem allgemeinen Sprachgebrauch folgend als Trennebene bezeichnet.

Bei einer weiteren vorteilhaften Ausführungsform sind in einer insbesondere horizontalen Ebene mehrere im Wesentlichen stationäre Formträger vorgesehen, wobei sich hiervon eine erste Gruppe und eine zweite Gruppe beabstandet zueinander gegenüberstehen. Hierbei kann ein Mehrfachträger drehbar um eine zu dieser Ebene parallelen, insbesondere in dieser Ebene liegenden Achse drehbar gelagert sein. Insbesondere ist der Mehrfachträger zwischen den zwei Gruppen von im Wesentlichen stationären Formträgern angeordnet und weist mindestens eine erste Gruppe von Blasformen auf, die zuerst mit der ersten Gruppe von Formträgern und nach einer halben Drehung um die Achse mit der zweiten Gruppe von Formträgern Kavitäten ausbildet. Eine Längsachse der stationären Blasformen, die im Wesentlichen durch eine Mittellinie vom Mündungsbereich bis zum Boden der Blasformen definiert ist, ist insbesondere ebenfalls in dieser Ebene angeordnet. Es wäre aber auch denkbar, die Mündungen der Blasformen der ersten Gruppe von im Wesentlichen stationären Formträgern um 180° versetzt zu den Mündungen der Blasformen der zweiten Gruppe von im Wesentlichen stationären Formträgern anzuordnen. Insbesondere weist der Mehrfachträger die gleiche Anzahl an Blasformen wie die Summe der ersten und zweiten Gruppe an stationären Formträgern auf, um bei jeder Drehung gleichzeitig mit allen Blasformhälften Kavitäten auszubilden. Insbesondere sind der Mehrfachträger und/oder die stationären Formträger zusätzlich um ein geringes Maß in der Ebene zum endgültigen Schließen der Kavitäten bewegbar. Diese Bewegung könnte auch durch ein Druckkissen durchgeführt werden.

Bevorzugte Ausführungsformen sind in der Zeichnung dargestellt. Es zeigen:

Fig. 1 einen schematischen Querschnitt durch Formträger einer stationären Blasmaschine gemäß einer ersten Ausführungsform;

Fig. 2 einen schematischen Querschnitt durch Formträger einer erfindungsgemäßen Blasmaschine gemäß einer zweiten Ausführungsform;

Fig. 3 einen schematischen Querschnitt durch Formträger einer erfindungsgemäßen Blasmaschine einer dritten Ausführungsform;

Fig. 4 einen schematischen Querschnitt durch Formträger der erfindungsgemäßen Blasmaschine gemäß einer vierten Ausführungsform;

Fig. 5 einen schematischen Querschnitt durch Formträger der erfindungsgemäßen Blasmaschine gemäß einer fünften Ausführungsform;

Fig. 6 einen schematischen Querschnitt durch zwei Formträger der erfindungsgemäßen Blasmaschine einer sechsten Ausführungsform;

Fig. 7 einen schematischen Querschnitt durch Formträger der erfindungsgemäßen Blasmaschine gemäß einer siebten Ausführungsform;

Fig. 8 einen schematischen Querschnitt durch Formträger der erfindungsgemäßen Blasmaschine gemäß einer achten Ausführungsform;

Fig. 9 einen schematischen Querschnitt durch eine erfindungsgemäße Rundläuferblasmaschine gemäß einer neunten Ausführungsform;

Fig. 10 einen schematischen Querschnitt durch eine erfindungsgemäße Rundläuferblasmaschine gemäß einer zehnten Ausführungsform;

Fig. 11 einen schematischen Querschnitt durch eine erfindungsgemäße Rundläuferblasmaschine gemäß einer elften Ausführungsform;

Fig. 12 einen Längsschnitt durch einen erfindungsgemäßen Formträger einer stationären Blasmaschine gemäß einer zwölften Ausführungsform;

Fig. 13 einen Längsschnitt durch erfindungsgemäße Formträger gemäß einer dreizehnten Ausführungsform;

Fig. 14 einen schematischen Längsschnitt durch erfindungsgemäße Formträger mit Hubeinrichtungen für Reckdorne und Bodenformen gemäß einer vierzehnten Ausführungsform;

Fig. 15 eine schematische Draufsicht auf eine erfindungsgemäße Blasmaschine mit einem Übergabesystem für Vorformlinge und geblasene Behälter gemäß einer fünfzehnten Ausführungsform;

Fig. 16 eine schematische Draufsicht auf eine erfindungsgemäße Blasmaschine mit einem Übergabesystem mit Doppelgreifern zum Greifen von Vorformlingen und geblasenen Behältern gemäß einer sechzehnten Ausführungsform;

Fig. 17 eine schematische Draufsicht auf einen Doppelgreifer mit individuell ansteuerbaren Greifern für Vorformlinge und Behälter gemäß einer siebzehnten Ausführungsform;

Fig. 18 eine erfindungsgemäße Blasmaschine mit einem Transportsystem für Vorformlinge und geblasene Behälter auf Grundlage einzeln angetriebener Fahrzeuge gemäß einer achtzehnten Ausführungsform;

Fig. 19 eine Variante des erfindungsgemäßen Transportsystems der Fig. 18 mit getrennten Transportwegen für Vorformlinge und geblasene Behälter gemäß einer neunzehnten Ausführungsform; und

Fig. 20 eine schematische Darstellung der Lagebeziehung zwischen den Trennebenen eines Mehrfachträgers.

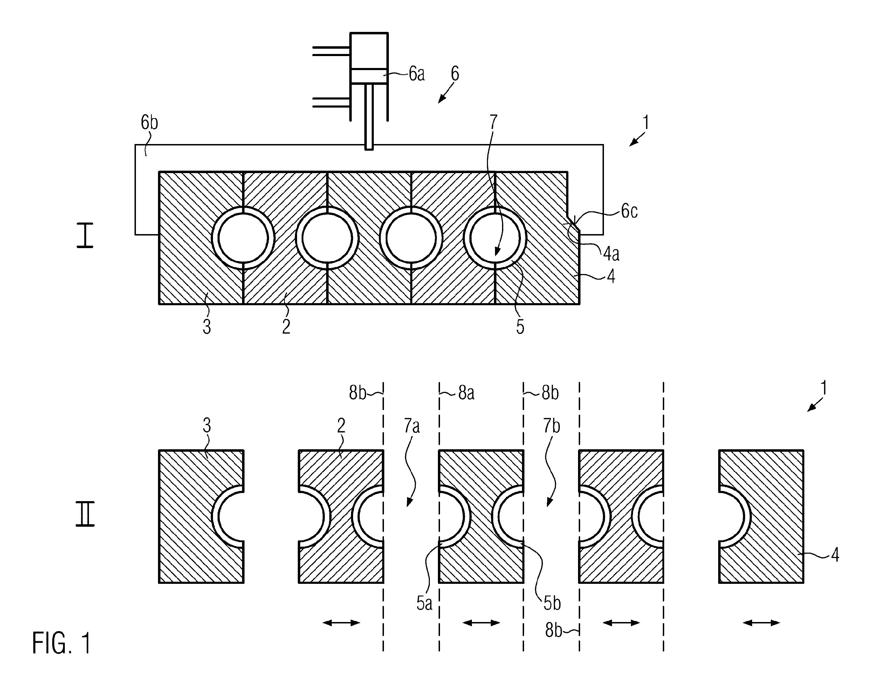

Wie die Fig. 1 erkennen lässt, umfasst eine erste, stationäre Ausführungsform 1 der erfindungsgemäßen Blasmaschine mehrere nicht umlaufende Formträger 2 bis 4 zum Tragen von Blasformhälften 5. Es ist ferner eine Verriegelungseinrichtung 6 vorgesehen, um die Formträger 2 bis 4 in einer geschlossenen Stellung I, in der die Blasformhälften 5 Blaskavitäten 7 einschließen verriegelt. Wie die Fig. 1 ferner verdeutlicht, kann die Verriegelungseinrichtung 6 eine Antriebseinheit 6a umfassen sowie eine Klammer 6b, die die Formträger 2 bis 4 aneinander presst. Die Klammer 6b ist derart ausgebildet, dass die Blaskavitäten 7 dem erforderlichen Blasdruck entsprechend abgedichtet werden. Zu diesem Zweck können beispielsweise an randständigen Formträgern 3, 4 und der Klammer 6b Keilflächen 4a, 6c oder dergleichen vorgesehen sein.

Die Fig. 1 zeigt die Formträger 2 bis 4 ferner in einer auseinander gefahrenen Stellung II, bei der die Blaskavitäten 7 jeweils geöffnet sind. Hierbei ist ferner zu erkennen, dass beispielsweise der randständige Formträger 3 stationär angeordnet sein kann. Wie sich aus der Fig. 1 ferner erkennen lässt, sind mehrere Formträger 2 als Doppelträger zum gleichzeitigen Tragen von je zwei Blasformhälften 5a, 5b ausgebildet, wobei die Blasformhälften 5a, 5b unterschiedlichen Blaskavitäten 7a, 7b zugeordnet sind. Entsprechend sind an den Doppelträgern zwei unterschiedliche Trennebenen 8a, 8b vorgesehen, so dass die Blasformhälften 5a, 5b eines Formträgers 2 keine gemeinsame Trennebene aufweisen.

Im Gegensatz zum stationären Formträger 3 sind die Doppelträger und der randständige Formträger 4 linear bewegbar, was in der Fig. 1 durch Doppelpfeile angedeutet ist. Die lineare Bewegung der Formträger 2, 4 kann beispielsweise durch Linearmotoren oder Pneumatikzylinder auf einem stationären Maschinengestell (nicht dargestellt) erzeugt werden. Zur Kraftübertragung können übliche Mechanismen wie Kniehebel (nicht dargestellt) eingesetzt werden. Die Formträger 2 bis 4 könnten aber auch auf einzeln angetriebenen Fahrzeugen, wie beispielsweise Schlitten und dergleichen, gelagert sein, wie dies nachfolgend noch ausführlicher beschrieben wird.

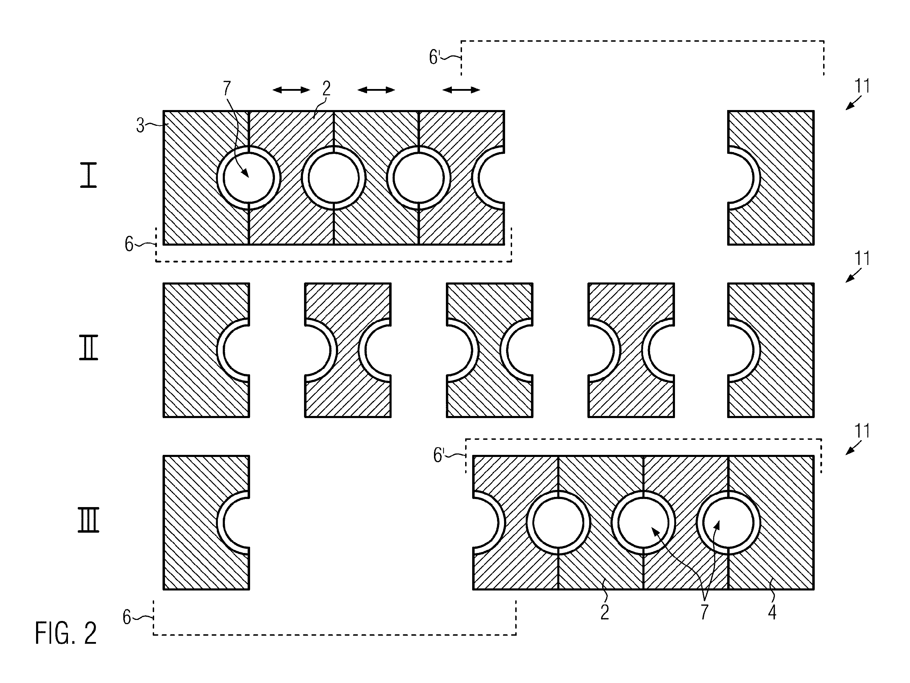

Die Fig. 2 zeigt eine zweite Ausführungsform 11 der erfindungsgemäßen Blasmaschine in der schematischen Draufsicht, wobei die zweite Ausführungsform 11 eine Variante der ersten Ausführungsform 1 darstellt, bei der die Formträger 2 bis 4 zwischen zwei Stellungen I, III zum Blasen von Behältern hin und her bewegt werden. Die randständigen Formträger 3, 4 sind hierbei stationär ausgebildet. Die Formträger 2 sind als Doppelträger ausgebildet und zwischen den randständigen Formträgern 3, 4 linear hin und her bewegbar. In einer ersten Stellung I bilden die Doppelträger mit dem ersten randständigen Formträger 3 Blaskavitäten 7 aus. In dieser Stellung werden die Formträger 2, 3 durch eine lediglich schematisch angedeutete Verriegelungseinrichtung 6 während des Blasens der Behälter fixiert.

In einer mit III bezeichneten zweiten Stellung bilden die Doppelträger mit dem anderen randständigen Formträger 4 ebenfalls Blaskavitäten 7 aus. Während des Blasens von Behältern werden die Formträger 2, 4 von einer ebenfalls lediglich schematisch angedeuteten Verriegelungseinrichtung 6' fixiert.

In einer mit II bezeichneten Bewegungsphase werden die Doppelträger zwischen den randständigen Formträgern 3, 4 verschoben. Die von den Formträgern 2 bis 4 gebildeten Blaskavitäten 7 sind hierbei jeweils geöffnet, so dass Vorformlinge in die geöffneten Blaskavitäten 7 eingebracht werden können. Die Entnahme fertig geblasener Behälter kann ebenfalls in der mit II bezeichneten Phase, insbesondere seitlich aus den Lücken zwischen den Doppelträgern 2 hinaus, erfolgen. Ebenso kann die Entnahme der fertig geblasenen Behälter in verschiedenen Zwischenstellungen erfolgen.

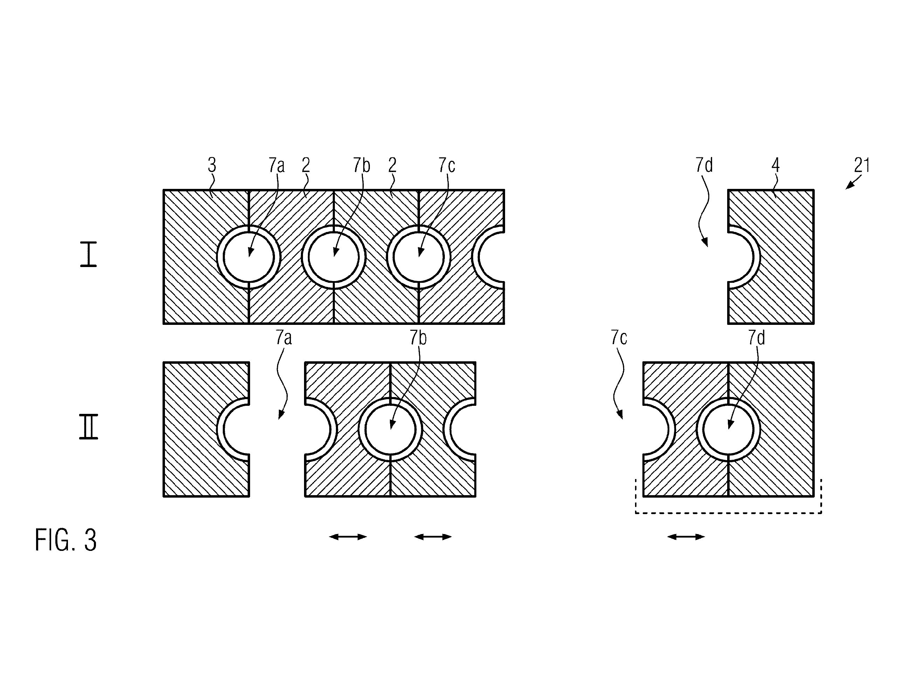

Wie der Fig. 3 zu entnehmen ist, ist eine dritte Ausführungsform 21 denkbar, bei der wenigstens zwei benachbarte Formträger 2 während des Blasens eines Behälters, also bei geschlossener Blaskavität, gemeinsam bewegt werden. Dies ist in der Fig. 3 an der Position II für die Blaskavität 7b exemplarisch dargestellt. Während die Blaskavitäten 7a, 7c geöffnet sind, um beispielsweise einen Vorformling einzubringen oder einen geblasenen Behälter zu entnehmen, sind die Blaskavitäten 7b, 7d geschlossen, so dass in diesen jeweils ein Behälter geblasen werden kann. Im Gegensatz dazu ist an der Position I lediglich die rechte Blaskavität 7d geöffnet, während die übrigen Blaskavitäten 7a bis 7c geschlossen sind, so dass beispielsweise in diesen gleichzeitig Behälter geblasen werden können.

Hierbei ist es möglich, einzelne Formträger 2 je nach Anforderung für das Blasen einzelner Behälter flexibel zwischen mehreren Stellungen der Formträger 2 bis 4 zu verschieben. Hierbei können zwischen einzelnen Formträgern 2 bis 4 gebildete Blaskavitäten 7a bis 7d je nach Fertigstellung einzelner Behälter individuell geöffnet werden, um die geblasenen Behälter zu entnehmen und/oder Vorformlinge in die geöffneten Blaskavitäten 7a bis 7d einzuführen.

Ein (hier nicht dargestelltes) Übergabesystem ist dann vorzugsweise derart ausgebildet, dass es die fertig geblasenen Behälter beim Öffnen einzelner Kavitäten 7a bis 7d an der jeweiligen Position der geöffneten Blaskavität 7a bis 7d übernehmen kann. Ebenso können Vorformlinge an den sich jeweils öffnenden Blaskavitäten 7a bis 7d eingebracht werden.

Wie aus der in den Fig. 2 und 3 dargestellten oszillierenden Bewegung der als Doppelträger ausgeführten Formträger 2 folgt, wird beim Öffnen einer Blaskavität 7a bis 7d automatisch eine Bewegung zum Schließen einer anderen Blaskavität 7a bis 7d ausgeführt. Anders gesagt, wird durch Verschieben der Doppelträger eine kontinuierliche Bewegung zum gleichzeitigen Schließen wenigstens einer Blaskavität 7a bis 7d und Öffnen wenigstens einer weiteren Blaskavität 7a bis 7d ausgeführt. Dadurch ist es insbesondere nicht notwendig, für das Öffnen und Schließen der Blaskavitäten 7a bis 7d getrennte Beschleunigungs- und Abbremsphasen für die Blasformhälften 5a, 5b vorzusehen. Vielmehr werden für das Öffnen und Schließen der Blasformkavitäten jeweils nur eine Beschleunigungs- und eine Abbremsphase benötigt. Entsprechend wird Antriebsenergie und Prozesszeit für weitere Beschleunigungs- und Abbremsrampen eingespart.

Für die in den Fig. 1 bis 3 dargestellten Blasformen gilt allgemein, ebenso wie für die nachfolgend beschriebenen Ausführungsformen, dass der Begriff Blasformhälften nicht impliziert, dass die Blasformen nur aus zwei Formteilen bestehen müssen, also lediglich eine einzige Trennebene 8a, 8b aufweisen. Vielmehr können die dargestellten Formträger 2 bis 4 durch separate Bodenformen ergänzt werden, die beispielsweise durch separate Hubmechanismen an den geeigneten Positionen gegen die dargestellten Blasformhälften 5a, 5b gefahren werden. Ebenso können Blasdüsen und/oder Reckstangen in die jeweiligen Blaskavitäten 7a bis 7d abgesenkt oder aus diesen herausgefahren werden.

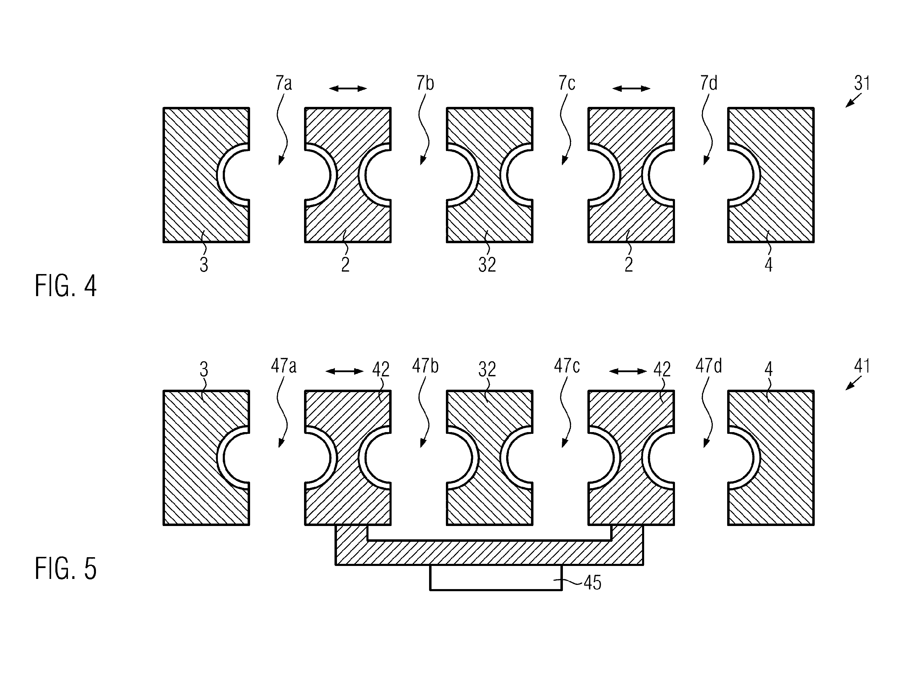

Die Fig. 4 zeigt eine vierte Ausführungsform 31 der erfindungsgemäßen stationären Blasmaschine, die eine Variante der dritten Ausführungsform 21 darstellt, bei der zusätzlich ein mittlerer Formträger 32 als stationärer Doppelträger ausgebildet ist. In diesem Fall können die verschiebbaren Formträger 2 unabhängig voneinander zwischen den stationären Formträgern 3, 32 und 4 hin und her bewegt werden. Auch in diesem Fall kann beim Verschieben der beweglichen Formträger 2 gleichzeitig eine kontinuierliche Bewegung zum Öffnen einer Blaskavität 7a und zum Schließen einer weiteren Blaskavität 7b durchgeführt werden. Somit lassen sich auch bei dieser Konfiguration die für das Abbremsen und Beschleunigen der Formträger 2 benötigten Prozesszeiten reduzieren.

Außerdem kann eine erste Gruppe von Blasformkavitäten 7a, 7b unabhängig von einer zweiten Gruppe von Blasformkavitäten 7c, 7d geöffnet und geschlossen werden. Dadurch lassen sich beispielsweise in den Gruppen von Blaskavitäten unterschiedliche Behälter herstellen. Das heißt, die Blasformträger 2, 3, 4, 32 können nicht nur mit unterschiedlichen Blasformhälften 5a, 5b bestückt werden, sondern es können auch die Blasparameter bei der Herstellung der einzelnen Behälter unterschiedlich eingestellt werden. Hierdurch lässt sich eine besonders große Flexibilität bei der Behälterherstellung und eine Reduzierung der Prozesszeiten gleichzeitig gewährleisten.

Die in der Fig. 5 dargestellte fünfte Ausführungsform 41 der erfindungsgemäßen Blasmaschine ist eine Variante der vierten Ausführungsform 31, die sich im Wesentlichen von dieser dadurch unterscheidet, dass die beweglichen Formträger 42 fest miteinander verbunden und durch einen gemeinsamen Antrieb 45 zwischen den beiden Endpositionen hin und her bewegt werden. Als Antriebsaggregat eignet sich beispielsweise ein Servomotor oder ein Linearmotor. Bei dieser Ausführungsform sind die Öffnungs- und Schließzeiten der jeweiligen Blaskavitäten 47a bis 47d aneinander gekoppelt. Im Gegenzug ist jedoch ein besonders kostengünstiger Antrieb möglich.

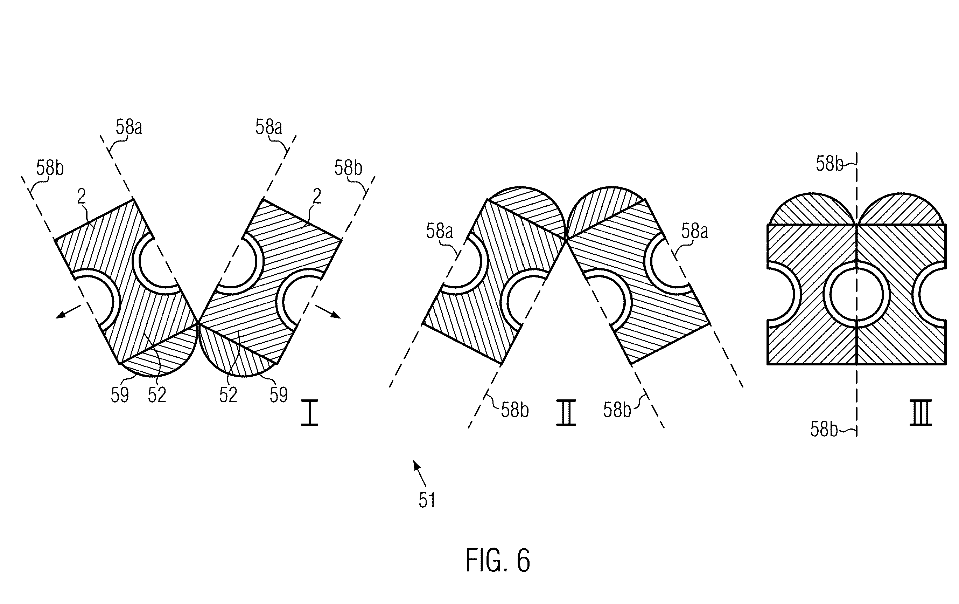

Die Fig. 6 zeigt eine sechste Ausführungsform 51 der erfindungsgemäßen Blasmaschine, bei der Doppelträger 52 durch eine Schwenkbewegung um 180° hin und her bewegt werden. Hierbei ist eine erste Endposition vorgesehen, bei der die Trennebenen 58a der Doppelträger 52 zusammengeführt sind, so wie eine zweite Endposition, bei der die entgegengesetzt orientierten Trennebenen 58b zueinander geführt sind. Die zweite Endposition ist in der Position III der Fig. 6 dargestellt. Die Positionen I und II stellen Zwischenpositionen in einer kontinuierlichen Bewegungsphase zwischen der ersten Endposition und der zweiten Endposition dar. Wie die Fig. 6 ferner darstellt, können die Formträger 52 in gekrümmten Bereichen 59 aneinander abrollen. Die Schwenkbewegung der Doppelträger 52 kann beispielsweise über Steuerkurven bewirkt werden. Bevorzug wird dafür ein gemeinsamer Antrieb verwendet. Mit der sechsten Ausführungsform lassen sich vorzugsweise stationäre Blasmaschinen realisieren. Auch hier lassen sich Beschleunigungs- und Abbremsrampen reduzieren.

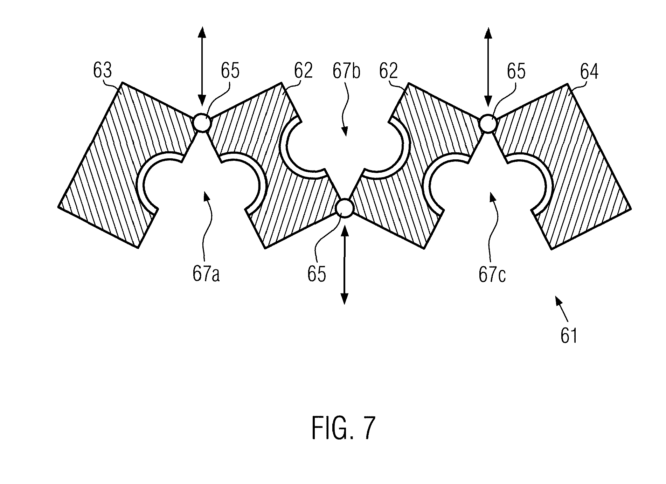

Die Fig. 7 zeigt eine siebte Ausführungsform 61 der erfindungsgemäßen stationären Blasmaschine, bei der wenigstens zwei Doppelträger 62 vorgesehen sind, die miteinander sowie mit randständigen Formträgern 63, 64 mittels Schwenkachsen 65 gekoppelt sind. Wie in der Fig. 7 durch Doppelpfeile angedeutet ist, können die Schwenkachsen 65 vorzugsweise linear verschoben werden, wodurch sich die Blaskavitäten 67a bis 67c kontinuierlich öffnen und schließen lassen. Dies ermöglicht eine alternative Antriebsvariante der erfindungsgemäßen Blasmaschine.

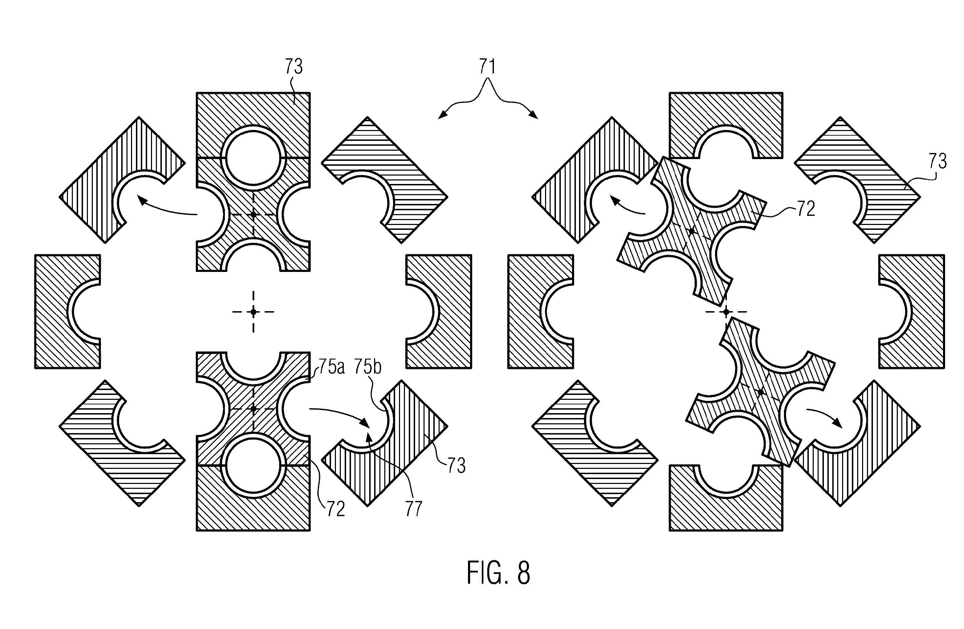

Die Fig. 8 zeigt schematisch eine achte Ausführungsform 71 der erfindungsgemäßen Blasmaschine, bei der Mehrfachträger 72 vorgesehen sind, die beispielsweise 4 oder 3 Blasformhälften 75a aufnehmen können. Wie die Fig. 8 ferner anhand von zwei unterschiedlichen Stellungen der Blasmaschine verdeutlicht, basiert die achte Ausführungsform 71 auf dem Prinzip eines Planetengetriebes. Demnach sind die Mehrfachträger 72 als Planetenräder ausgebildet, die innerhalb eines von stationären Formträgern 73 mit Blasformhälften 75b gebildeten Hohlrads umlaufen. Der Antrieb der Mehrfachträger 72 erfolgt über ein (nicht dargestelltes) Sonnenrad. Beim Umlaufen der Mehrfachträger 72 kommen bewegliche Blasformhälften 75a und stationäre Blasformhälften 75b jeweils gegenüber zu liegen und bilden nacheinander Blaskavitäten 77 aus. Die Bewegungsphase dazwischen ist wiederum kontinuierlich, so dass gleichzeitig Kavitäten 77 geschlossen und geöffnet werden. Hierdurch lässt sich eine stationäre Blasmaschine mit quasikontinuierlicher Betriebsweise realisieren. An den stationären Formträgern 73 lassen sich Antriebe und Druckluftleitungen mit besonders geringem apparativen Aufwand für die jeweiligen Blaskavitäten 77 bereitstellen. In einer nicht dargestellten Variante hierzu könnten auch zwei oder mehr Blasformhälften 75a eines Mehrfachträgers 72 gleichzeitig mit zwei oder mehr stationären Formträgern 73 zur Bildung zweier oder mehrerer Kavitäten 77 in Kontakt bringbar sein. Der Winkel der Trennebenen zwischen mindestens zwei benachbarten Blasformen 75a auf einem Mehrfachträger 72 wäre dann der gleiche wie der Winkel zwischen den Trennebenen zweier benachbarter stationärer Blasformen 75b.

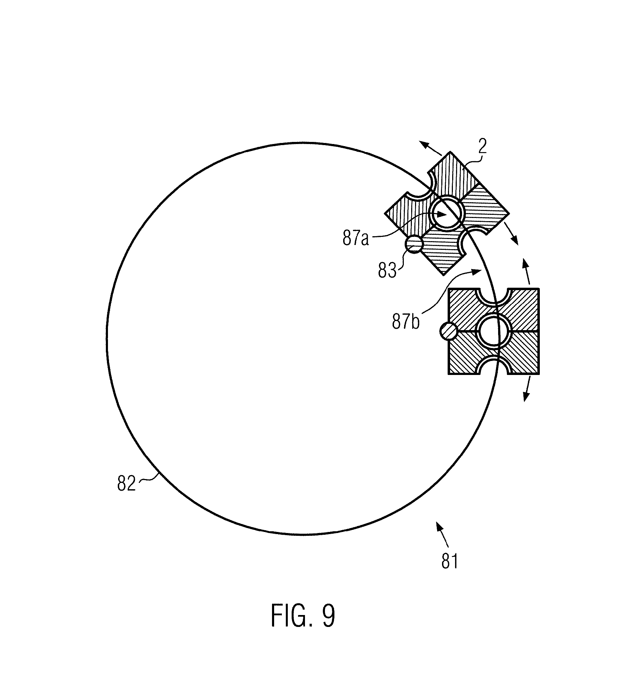

Die Fig. 9 zeigt eine neunte Ausführungsform 81 der erfindungsgemäßen Blasmaschine, die als Rundläufer ausgebildet ist. Hierbei sind eine Vielzahl gleichartiger Formträger 2 als Doppelträger ausgebildet und umfänglich gleichmäßig an einem Blasrad 82 angeordnet. Ferner sind jeweils zwei benachbarte Doppelträger durch einen gemeinsamen Schwenkmechanismus 83 aneinander gekoppelt. Derart aneinander gekoppelte Doppelträger bilden jeweils gemeinsam eine erste Gruppe von Blaskavitäten 87a aus. Ferner wird zwischen zwei benachbarten, nicht durch den Schwenkmechanismus 83 miteinander gekoppelten Doppelträgern eine zweite Gruppe von Blaskavitäten 87b ausgebildet. Durch kontinuierliches Verschwenken der Formträger 2 um die jeweiligen Schwenkmechanismen 83 wird entweder die erste Gruppe von Blaskavitäten 87a geschlossen und die zweite Gruppe von Blaskavitäten 87b geöffnet oder umgekehrt. Somit lässt sich auch bei dieser Ausführungsform 81 durch eine einzige kontinuierliche Bewegung, in diesem Fall mit Hilfe des Schwenkmechanismus 83, ein gleichzeitiges Öffnen und Schließen von Blaskavitäten 87a, 87b bewirken. Besonders vorteilhaft ist eine Variante, bei der bei jedem Umlauf des Blasrads 82 ein Wechsel zum Öffnen der einen Gruppe von Blaskavitäten 87a und Schließen der jeweils anderen Gruppe von Blaskavitäten 87b erfolgt. Das heißt bei kontinuierlichem Umlauf des Blasrads 82 werden bei jedem zweiten Umlauf in der ersten Gruppe von Blasformkavitäten 87a Behälter geblasen und in der zweiten Gruppe von Blaskavitäten 87b fertig geblasene Behälter entnommen und neue Vorformlinge eingebracht, und umgekehrt.

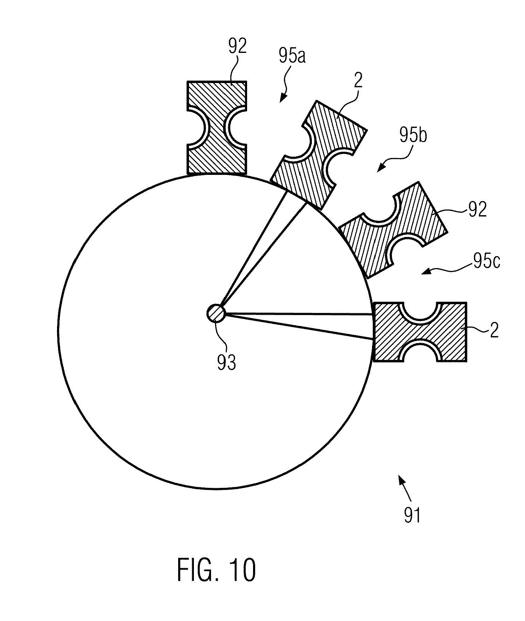

Die Fig. 10 zeigt eine zehnte Ausführungsform 91 der erfindungsgemäßen Blasmaschine, die sich von der neunten Ausführungsform 81 im Wesentlichen dadurch unterscheidet, dass sich umfänglich bewegliche Formträger 2 und stationäre Formträger 92 abwechseln. Die beweglichen Formträger 2 sind ferner an einer gemeinsamen Schwenkeinrichtung 93 gelagert. Dadurch können beispielsweise bei einem ersten Umlauf die Blaskavitäten 95a und 95c gemeinsam geschlossen werden, während dazwischen liegende Blaskavitäten 95b für die Entnahme fertig geblasener Behälter und das Zuführen von Vorformlingen geöffnet sind. Beim nachfolgenden Umlauf werden mittels der Schwenkeinrichtung 93 die zuvor geöffneten Blaskavitäten 95b geschlossen, während die zuvor geschlossenen Blaskavitäten 95a, 95c geöffnet werden. Auch in diesem Fall lässt sich durch eine kontinuierliche Schwenkbewegung der Doppelträger 2 gleichzeitig ein Öffnen und ein Schließen von Blaskavitäten 95a bis 95c mit minimierten Beschleunigungs- und Abbremsphasen bewirken.

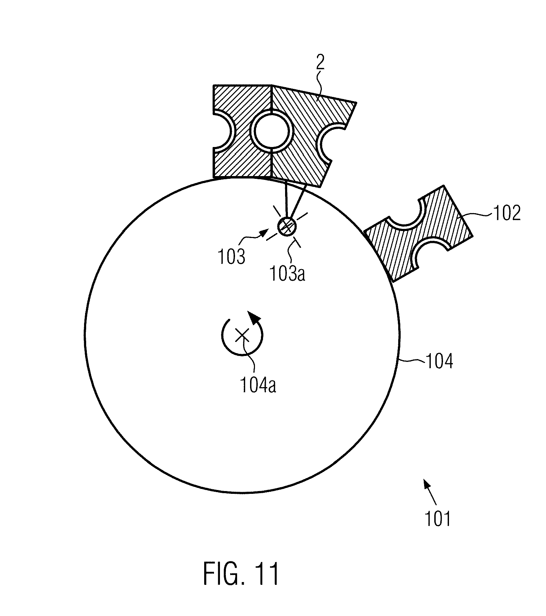

Die Fig. 11 zeigt eine elfte Ausführungsform 101 der erfindungsgemäßen Blasmaschine, deren Funktionsweise derjenigen der zehnten Ausführungsform entspricht. Auch bei der elften Ausführungsform sind abwechselnd bewegliche Formträger 2 und stationäre Formträger 102 als Doppelträger vorgesehen. Die beweglichen Doppelträger sind jedoch jeweils an separaten Schwenkeinrichtungen 103 vorzugsweise im umfänglichen Randbereich des Blasrads 104 gelagert. Wie die Fig. 11 ferner verdeutlicht, können die beweglichen Formträger 2 und/oder die stationären Formträger 102 einen trapezförmigen Querschnitt aufweisen, um einen radialen Versatz zwischen der Drehachse 104a des Blasrads 104 und der Drehachsen 103a der Schwenkeinrichtungen 103 auszugleichen. Dies reduziert den Kraftaufwand bei der Betätigung der Schwenkeinrichtungen 103, beispielsweise mit Hilfe von Steuerkurven.

Das Einbringen von Vorformlingen und das Ausbringen von Behältern nach den Ausführungsformen der Figuren 9, 10 und 11 kann beispielsweise über (nicht gezeigte) in der Umgebung des Blasrads 82, 104 fest angeordnete, sich drehende Zuführ- oder Entnahmesterne erfolgen oder über flexible Fahrzeugsysteme oder andere zum Behältertransport geeignete Systeme. Bei der Ausführungsform mit Sternrädern sind auch jeweils mehrere, am Umfang des Blasrads 82, 104 verteilte Zuführ-, als auch Entnahmesterne möglich.

Bei den Ausführungsformen der Figuren 9, 10 und 11 schneiden die Trennebenen in ihrer Verlängerung insbesondere die Achse 104a des Blasrads 82, 104.

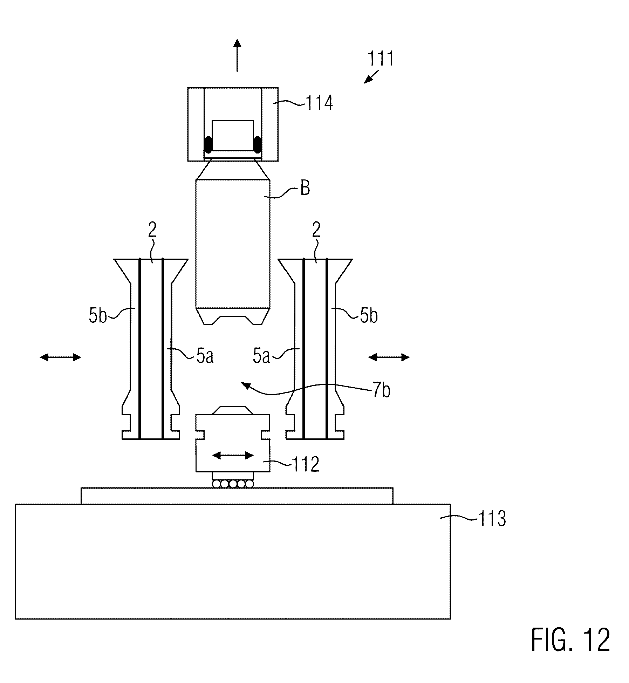

Die Fig. 12 zeigt einen Längsschnitt durch eine zwölfte Ausführungsform 111 der erfindungsgemäßen Blasmaschine in einer stationären Ausführung. Demnach ist neben beweglichen Formträgern 2 für je zwei Blasformhälften 5a, 5b eine Bodenform 112 vorgesehen, die linear verschiebbar gelagert ist, so dass diese gemeinsam mit den Doppelträgern 2 verschoben werden kann. Dadurch lässt sich beispielsweise die im Zusammenhang mit der dritten Ausführungsform 21 beschriebene gemeinsame Bewegung benachbarter Formträger 2 bei geschlossener Blaskavität 7b realisieren. Die Formträger 2 und die Bodenform 112 sind vorzugsweise auf einem stationären Maschinengestell 113 gelagert. Somit eignet sich die zwölfte Ausführungsform für eine lineare Anordnung benachbarter Blaskavitäten 7a bis 7d, wie für die dritte Ausführungsform beschrieben wurde. In der Fig. 12 ist ferner ein fertig geblasener Behälter B angedeutet sowie eine Blasdüse 114, die gemeinsam mit dem fertig geblasenen Behälter B von der Blaskavität 7b abgehoben werden kann. Die Bewegungen sind in der Fig. 12 durch Pfeile angedeutet. Die Bodenform 112 kann fest mit dem Maschinengestell 113 verbunden sein, wenn keine Bewegung der geschlossenen Blaskavität 7b benötigt wird. Auch hier werden benachbarte Blaskavitäten durch kontinuierliche Bewegung der Formträger 2 gleichzeitig geschlossen und geöffnet. Zum Ausbringen der Flasche könnte auch der Boden 112 höhenbeweglich sein (nicht dargestellt).

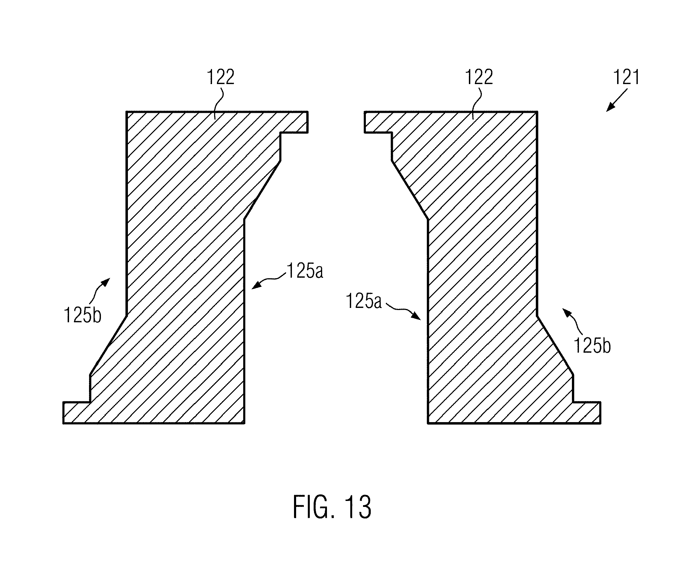

Die Fig. 13 zeigt eine dreizehnte Ausführungsform 121 der erfindungsgemäßen Formträger 122, bei denen jeweils zwei um 180° zueinander gekippte Blasformhälften 125a, 125b vorgesehen sind. Das heißt, die Blaskavitäten stehen bezüglich der jeweils benachbarten auf dem Kopf. Durch Kombination miteinander korrespondierender Blasformhälften 125a und 125b wird somit jeder zweite Behälter B auf dem Kopf stehend geblasen. Dadurch können Blaskavitäten besonders raumsparend nebeneinander angeordnet werden. In diesem Fall werden zwei Ebenen zur Übergabe der Vorformlinge und der fertig geblasenen Behälter vorgesehen. Dies lässt sich beispielsweise mit einem Transferstern realisieren, bei dem die Greifer auf zwei Ebenen verteilt sind. Die Formträger 122 lassen sich ebenso erfindungsgemäß kontinuierlich bewegen.

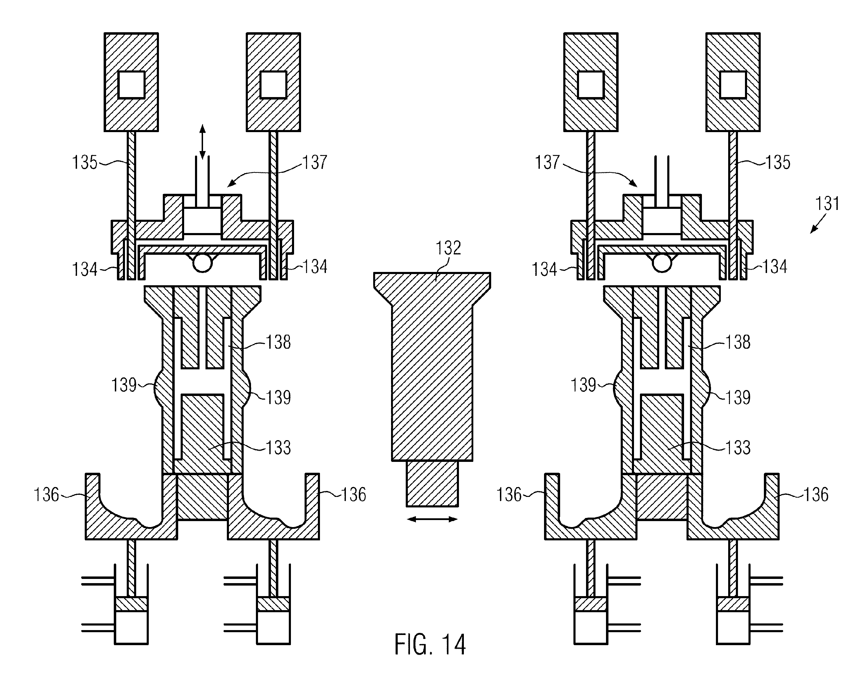

Die Fig. 14 zeigt eine vierzehnte Ausführungsform 131 der erfindungsgemäßen Blasmaschine, bei der bewegliche Formträger 132 als Doppelträger vorgesehen sind sowie stationäre Formträger 133 mit zugeordneten Blasdüsen 134 und Reckstangen 135. Ferner sind absenkbare Bodenformen 136 an den stationären Formträgern 133 vorgesehen. Somit kann die Bauweise der beweglichen Doppelträger 132 besonders vereinfacht werden. Ebenso können aktiv betriebene und/oder Druck führende Komponenten, wie beispielsweise die Reckstangen 135 und die Blasdüsen 134, stationär gelagert werden. Hierbei wäre auch eine Vereinfachung denkbar, indem die Reckstangen 135 und/oder die Blasdüsen 134 eines Formträgers 133 mittels eines gemeinsamen Antriebs gehoben und gesenkt werden. Die Blasdüsen 134 könnten im Gegensatz zur dargestellten Ausführungsform auch separat zu betätigen sein. Hier ist es ebenfalls möglich, einen Ventilblock 137 zum Bereitstellen mehrerer Blasdrücke und zur Entlastung der Luft separat einer Kavität oder mehreren Kavitäten zuzuordnen.

Ventile für Druckkissen 138 zwischen dem Formträger 133 und Blasformhälften 139 können entweder in den Ventilblöcken 137 untergebracht sein oder direkt am Druckkissen 138 angeordnet sein. Zugehörige Dichtungen sind der Einfachheit halber nicht dargestellt. Die Druckkissen 138 weisen beispielsweise eine größere Fläche als die zu blasenden Behälter auf und werden mit dem Blasdruck beaufschlagt, um die Blasformhälften fest aneinander zu drücken und die Trennnaht des Behälters zu minimieren. Besonders vorteilhaft ist, dass an einem Formträger 133 lediglich ein Druckkissen 138 für zwei Kavitäten oder Blasformhälften 139 vorgesehen sein kann.

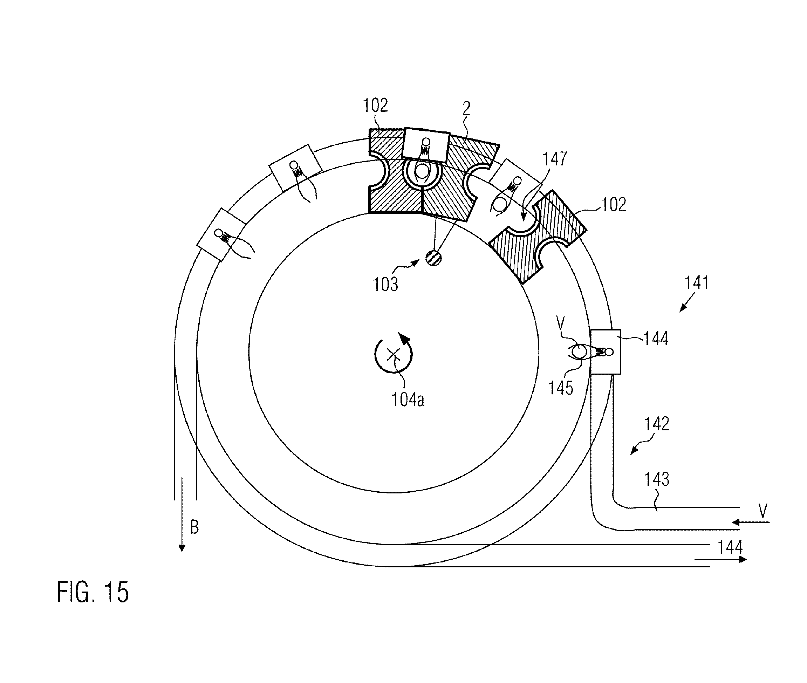

Die Fig. 15 zeigt eine fünfzehnte Ausführungsform 141 der erfindungsgemäßen Blasmaschine, bei der die Formträger 2, 102 und die Schwenkeinrichtungen 103 der elften Ausführungsform 101 mit einer Transporteinrichtung 142 zum Transportieren von Vorformlingen V und von fertig geblasenen Behältern B kombiniert ist. Die Transporteinrichtung 142 umfasst demnach ein Schienensystem 143 und einzeln angetriebene Fahrzeuge 144 auf denen Greifeinrichtungen 145 zum Greifen von Vorformlingen V und/oder fertig geblasenen Behältern B gelagert sind. Die Fahrzeuge 144, wie beispielsweise Transportschlitten, sind vorzugsweise individuell angetrieben, so dass sie bedarfsabhängig in die Bereiche einzelner Blaskavitäten 147 gefahren werden können. Das Schienensystem 143 verläuft vorzugsweise oberhalb der Blasformkavitäten 147. Dadurch lassen sich Vorformlinge V auf einfache Weise von oben in die geöffneten Blasformkavitäten einführen. Ebenso können die Fahrzeuge 144 zur Entnahme fertig geblasener Behälter B (nicht gezeigt) gezielt an sich öffnende Kavitäten 147 gefahren werden. Auf den Fahrzeugen 144 können auch Doppelklammern 145 vorgesehen sein, wie dies nachfolgend noch ausführlicher beschrieben ist, um sowohl fertig geblasene Behälter B zu entnehmen als auch Vorformlinge in entleerte Blaskavitäten 147 einzuführen. Die Transporteinrichtung 142 ließe sich auch mit den anderen beschriebenen Blasmaschinen vom Rundläufertyp kombinieren. Die Trennebenen der Formträger 102 und der zugehörigen Blasformen können hier (nicht dargestellt) tangential zur Transportrichtung der Fahrzeuge 144 ausgerichtet sein, um eine Entnahme der Behälter zu erleichtern. Alternativ können auch die Fahrzeuge 144 dementsprechende Entnahmebewegungen mit den Klammern 145 durchführen, indem die Klammern 145 um eine Achse geschwenkt werden. Alternativ könnten an den Formträgern Steuerkurven für diese Bewegungen vorgesehen werden, mit denen die Klammer 145 zusammenwirkt.

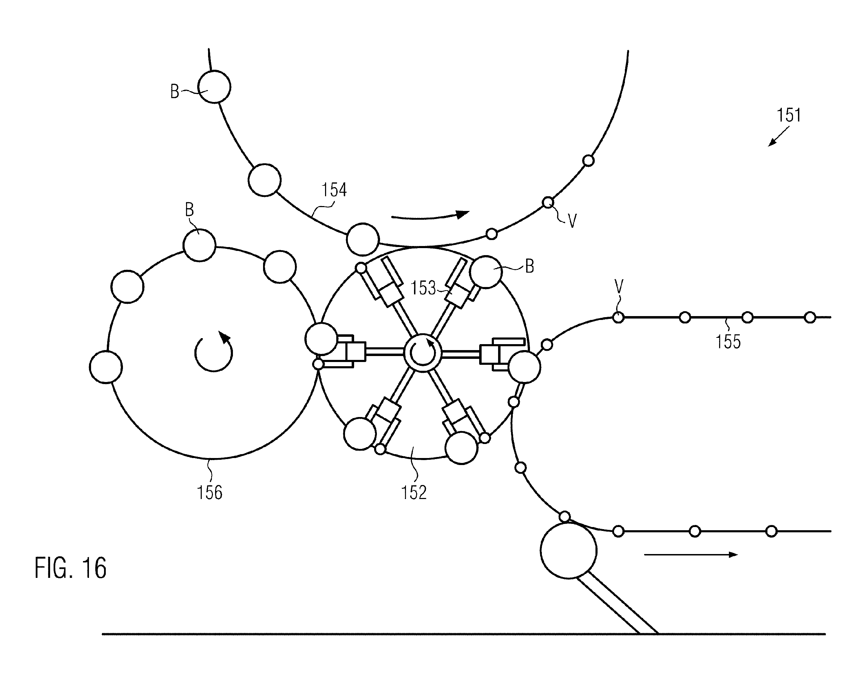

Die Fig. 16 zeigt eine sechzehnte Ausführungsform 151 der erfindungsgemäßen Blasmaschine, bei der eine zentrale Übergabeeinrichtung 152 in Form eines Sternrads mit Doppelgreifern 153 zur Übergabe der Behälter B und der Vorformlinge V mit einem Blasrad 154 kombiniert ist. Hierbei können erfindungsgemäße Formträger, wie beispielsweise anhand der neunten bis vierzehnten Ausführungsform beschrieben, auf dem Blasrad 154 angeordnet werden. Dies ist in der Fig. 16 der Einfachheit halber nicht dargestellt. Angedeutet sind jedoch eine Transporteinrichtung 155 zum Zuführen und Erwärmen von Vorformlingen V und eine weitere Transporteinrichtung 156 zum Abtransportieren der fertig geblasenen Behälter B. Die Transportrichtungen sind jeweils durch Pfeile angedeutet.

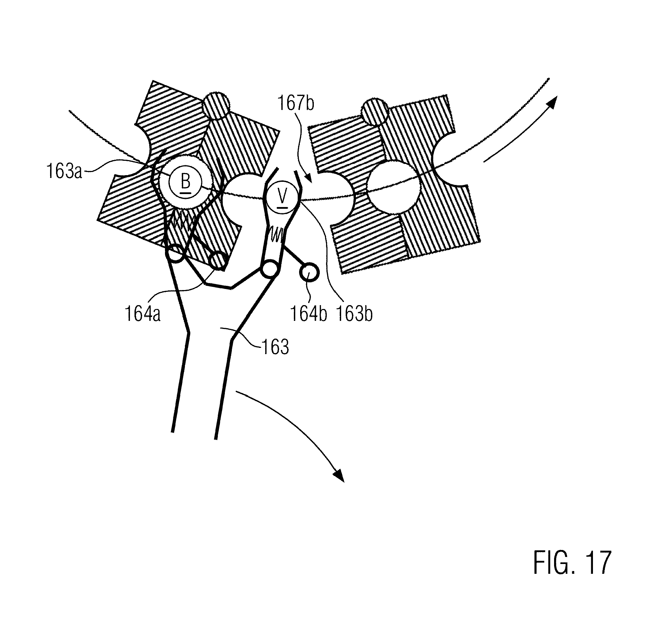

Die Fig. 17 zeigt eine siebzehnte Ausführungsform 161 der erfindungsgemäßen Blasmaschine, bei der Doppelgreifer 163 beispielhaft mit den Formträgern 2 der neunten Ausführungsform 81 kombiniert sind. An den Doppelgreifern 163 sind jeweils eine erste Greifeinheit 163a zum Greifen fertig geblasener Behälter B und eine zweite Greifeinheit 163b zum Greifen von Vorformlingen V vorgesehen. Die Greifeinheiten 163a, 163b sind jeweils getrennt durch Führungsrollen 164a, 164b oder andere geeignete Antriebe, wie beispielweise Servomotoren, ansteuerbar. Beispielsweise kann ein Vorformling V in eine geöffnete oder sich öffnende Blaskavität 167b eingebracht werden, während ein fertig geblasener Behälter B aus einer sich öffnenden oder bereits geöffneten, benachbarten Blaskavität entnommen wird.

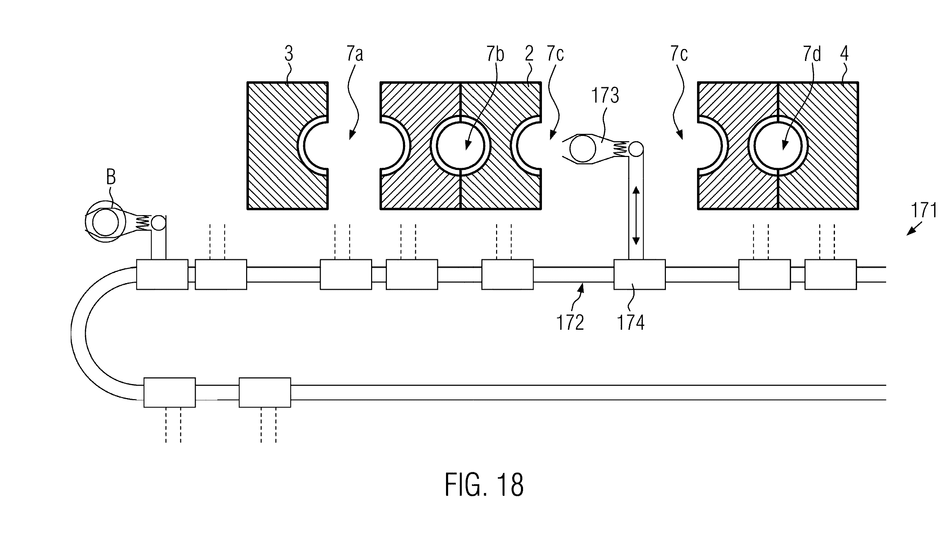

Die Fig. 18 zeigt eine achtzehnte Ausführungsform 171 der erfindungsgemäßen Blasmaschine, bei der die stationäre Blasmaschine mit kontinuierlich linear verschiebbaren Formträgern 2 und endständigen stationären Formträgern 3, 4 der dritten Ausführungsform 21 mit einer Transporteinrichtung 172 mit individuell ansteuerbaren Greifern 173 kombiniert ist. Die Greifer 173 sind beispielsweise auf einzeln angetriebenen Fahrzeugen 174 gelagert, die entlang einer Führungseinrichtung 175, wie beispielsweise einer Schiene, mittels Linearantrieben bewegt werden können. Vorzugsweise sind die aktiven Antriebskomponenten, wie beispielsweise Linearmotormodule, in das Schienensystem integriert, so dass die Fahrzeuge 174 als reaktive, insbesondere passive Komponenten ausgelegt werden können.

Die Greifer 173 sind vorzugsweise teleskopisch von den Fahrzeugen 174 ausfahrbar. Die Transporteinrichtung 172 ist vorzugsweise flexibel ansteuerbar, so dass bedarfsabhängig mit den Fahrzeugen 174 Positionen im Bereich der Blaskavitäten 7a bis 7d angefahren werden können. Beispielsweise kann anhand (nicht gezeigter) Sensoren festgestellt werden, dass ein Behälter B fertig geblasen ist, um folglich ein Fahrzeug 174 in den Bereich der zugeordneten Blaskavität zu fahren. Nach Öffnen der Blaskavität kann der Behälter mit dem Greifer 173 entnommen werden und an eine geeignete Übergabevorrichtung zum Weitertransport abgegeben werden. In gleicher Weise können Vorformlinge V an nicht bestückte Blaskavitäten 7a bis 7d gezielt übergeben werden. Zusätzlich oder alternativ zur teleskopischen Lagerung der Greifer 173 können diese schwenkbar sein. Die Fahrzeuge 174 lassen sich flexibel an die kontinuierlichen Bewegungen beim Öffnen und Schließen der Blaskavitäten 7a bis 7d anpassen.

Ebenso können in einem Fahrzeug 174 zwei getrennt steuerbare Greifer 173 zum Halten je eines Vorformlings V und eines fertig geblasenen Behälters B vorgesehen sein. Vorzugsweise sind die Greifer 173 dann jeweils getrennt bezüglich des Fahrzeugs 174 ausfahrbar und/oder schwenkbar.

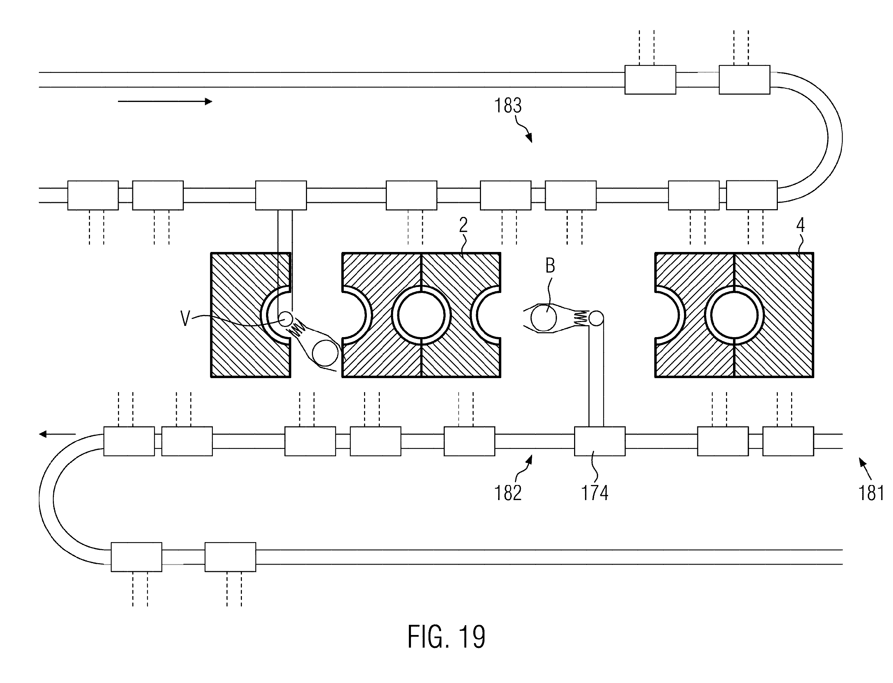

Die Fig. 19 zeigt eine neunzehnte Ausführungsform 181 der erfindungsgemäßen Blasmaschine, die sich von der achtzehnten Ausführungsform im Wesentlichen dadurch unterscheidet, dass zwei getrennte Transportsysteme für Vorformlinge V und fertig geblasene Behälter B vorgesehen sind. Dadurch lassen sich die Vorformlinge V und die Behälter B auf besonders flexible Weise in Blaskavitäten 7a bis 7d einbringen oder aus diesen entnehmen.

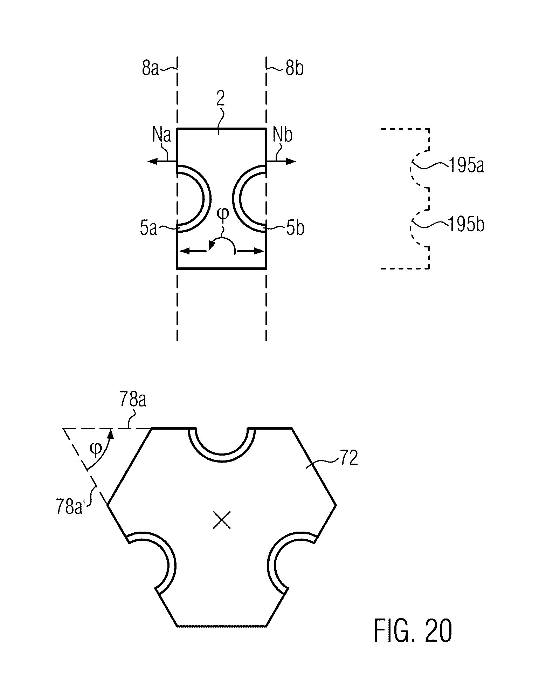

Die Fig. 20 verdeutlicht die erfindungsgemäße Lage der Trennebenen 8a, 8b an einem gemeinsamen Formträger 2. Demnach sind die Trennebenen 8a, 8b eines in Fig. 20 oben angedeuteten Doppelträgers vorzugsweise parallel und derart angeordnet, dass die zugeordneten Blasformhälften voneinander weg weisen.

Bei einer gedachten Überlagerung der Trennebenen 8a, 8b, jeweils in Pfeilrichtung gesehen, wäre demnach zwischen diesen oder, für Doppelträger auch anders ausgedrückt, zwischen den Normalenvektoren Na, Nb der Trennebenen 8a, 8b, ein Winkel φ von 180° ausgebildet. Sinngemäß ergäbe sich bei der gestrichelt gezeichneten gleichsinnigen Anordnung der Blasformhälften 195a, 195b ein Winkel φ von 0°.

Beispielsweise für die achte Ausführungsform 71 ergibt sich mit Dreifachträgern 72 ein Winkel φ von je 60° zwischen benachbarten Trennebenen 78a, 78a'. Demnach lässt sich der Winkel φ bei wenigstens drei Trennebenen pro Mehrfachträger allgemein wie folgt berechnen:

$$\varphi = 180° * (x - 2) / x,$$

wobei x die Anzahl der Blasformhälften pro Mehrfachträger bezeichnet.

Die beschriebenen Ausführungsformen lassen sich beliebig in technisch sinnvoller Weise kombinieren. Durch die Kombination von Blasformhälften, die unterschiedlichen Blaskavitäten zugeordnet sind, an Mehrfachträgern lassen sich Bewegungen zum Öffnen und Schließen von Blaskavitäten gleichzeitig und kontinuierlich ausführen und die Anzahl notwendiger Beschleunigungs- und Abbremsrampen zum Öffnen und/oder Schließen von Blaskavitäten reduzieren. Dadurch kann Prozesszeit zum Blasen von Behältern gewonnen werden. Bei Rundläufermaschinen ist es insbesondere möglich, die Übergabe der Vorformlinge und der fertig geblasenen Behälter mit Hilfe eines einzelnen Übergabesterns zu bewerkstelligen. Besonders vorteilhaft sind hierbei Doppelgreifer, die getrennt steuerbar eine bedarfsabhängige Koordination der Übergabebewegungen an die sich öffnenden, geöffneten und/oder sich schließenden Blaskavitäten ermöglicht.

Die Erfindung ist nicht nur auf Blasmaschinen beschränkt, sondern kann bei allen Maschinen eingesetzt werden, bei denen mindestens zwei Behandlungselemente von unterschiedlichen Seiten auf Behälter oder Vorformlinge zugestellt werden. Beispielsweise ist dies beim sogenannten "preferential heating" denkbar, wonach Vorformlinge zur Temperierung von zwei Platten berührt werden. Das Grundprinzip hierfür ist in der Druckschrift DE 102009021792 A1 offenbart. Die Bewegungen der Platten können ähnlich der der Formträger ausgeführt werden.

**Patentansprüche**

1.　Blasmaschine für Kunststoffbehälter, mit mehreren Formträgern zum Tragen von Blasformhälften, wobei zumindest zwei der Formträger als bewegliche Mehrfachträger zum gleichzeitigen Tragen von wenigstens zwei Blasformhälften, die unterschiedlichen Blaskavitäten zugeordnet sind, ausgebildet sind,

**dadurch gekennzeichnet, dass**

die Mehrfachträger derart angetrieben sind, dass sich mittels einer kontinuierlichen Bewegung der Mehrfachträger wenigstens eine der Blaskavitäten öffnen lässt und sich gleichzeitig wenigstens eine andere der Blaskavitäten schließen lässt.

2. Blasmaschine nach Anspruch 1, wobei wenigstens ein Formträger linear verschiebbar gelagert ist, um gleichzeitig eine erste Gruppe von Blaskavitäten zu schließen und eine zweite Gruppe von Blaskavitäten zu öffnen.

3. Blasmaschine nach Anspruch 1, wobei die Formträger drehbar gelagert sind, um gleichzeitig eine erste Gruppe von Blaskavitäten zu schließen und eine zweite Gruppe von Blaskavitäten zu öffnen.

4. Blasmaschine nach wenigstens einem der Ansprüche 1 bis 3, wobei die Formträger als Doppelträger zum Tragen von zwei von einander weg weisenden Blasformhälften ausgebildet sind.

5. Blasmaschine nach wenigstens einem der vorigen Ansprüche, wobei wenigstens einer der Formträger stationär ist.

6. Blasmaschine nach Anspruch 5, wobei an dem stationären Formträger eine Blasdüse und/oder eine Reckstange und/oder ein Druckkissen vorgesehen ist.

7. Blasmaschine nach wenigstens einem der vorigen Ansprüche, wobei zumindest zwei der Formträger in einer Blasstellung, in der sie gemeinsam eine Blaskavität schließen, gleichzeitig bewegt werden können.

8. Blasmaschine nach wenigstens einem der vorigen Ansprüche, wobei zumindest zwei Mehrfachträger vorgesehen sind, die unabhängig voneinander bewegbar sind.

9. Blasmaschine nach Anspruch 8, wobei die Mehrfachträger auf einzeln angetriebenen Fahrzeugen gelagert sind, die insbesondere mittels magnetischer Kraftkopplung angetrieben sind.

10. Blasmaschine, nach wenigstens einem der Ansprüche 1 bis 7, wobei wenigstens zwei Mehrfachträger vorgesehen sind, die fest aneinander gekoppelt und gemeinsam angetrieben sind.

11. Blasmaschine nach wenigstens einem der vorigen Ansprüche, wobei benachbarte Blasformhälften um 180° zueinander gekippt sind.

12. Blasmaschine nach Anspruch 1, wobei der Mehrfachträger zum Tragen von wenigstens drei Blasformhälften ausgebildet und drehbar gelagert ist, und insbesondere als Planetenrad ausgebildet ist, um die unterschiedlichen Blaskavitäten zu schließen.

13. Blasmaschine nach wenigstens einem der vorigen Ansprüche, ferner mit einer Verriegelungseinrichtung zum Verriegeln der Mehrfachträger an wenigstens einem benachbarten Formträger.

14. Blasmaschine nach wenigstens einem der vorigen Ansprüche, ferner mit einer Übergabeeinrichtung, an der Doppelgreifer zum Greifen eines Vorformlings und eines geblasenen Behälters vorgesehen sind.

15. Blasmaschine nach wenigstens einem der vorigen Ansprüche, ferner mit einer Übergabeeinrichtung, bei der Greifer für Vorformlinge und/oder geblasene Behälters auf einzeln angetriebenen Fahrzeugen gelagert sind.

16. Blasmaschine nach wenigstens einem der vorigen Ansprüche, wobei die Blasformhälften einander entsprechende Trennebenen aufweisen, an denen jeweils zwei Blasformhälften aneinander geführt werden können, und Trennebenen desselben Mehrfachträgers zueinander parallel angeordnet sind, so dass die zugehörigen Blasformhälften voneinander weg weisen, oder zueinander unter einem Winkel ($\varphi$) gleich 180° * (x - 2) / x angeordnet sind, wobei x die Anzahl der Blasformhälften pro Mehrfachträger bezeichnet.

17. Blasmaschine nach wenigstens einem der vorigen Ansprüche, wobei die Blasformhälften einander entsprechende Trennebenen aufweisen, an denen jeweils zwei Blasformhälften aneinander geführt werden können, und die Blasformhälften an den Mehrfachträgern jeweils in einer zueinander gleichbleibenden Lage angeordnet sind, wobei insbesondere Trennebenen desselben Mehrfachträgers miteinander einen Winkel ($\varphi$) ungleich Null einschließen.

## Claims

1. Blow-molding machine for plastic containers, with a plurality of mold carriers for carrying blow mold halves, where at least two of said mold carriers are designed as movable multicarriers for simultaneously carrying at least two blow mold halves that are associated to different blow mold cavities, **characterized in that**

said multi-carriers are driven such that at least one of said blow mold cavities can be opened with a continuous motion of said multi-carriers and simultaneously at least one other of said blow mold cavities can be closed.

2. Blow-molding machine according to claim 1, where at least one mold carrier is mounted linearly displaceable to simultaneously close a first set of blow mold cavities and to open a second set of blow mold cavities.

3. Blow-molding machine according to claim 1, where said mold carriers are rotatably mounted to simultaneously close a first set of blow mold cavities and to open a second set of blow mold cavities.

4. Blow-molding machine according to one of the claims 1 to 3, where said mold carriers are designed as a double carriers for carrying two blow mold halves facing away from each other.

5. Blow-molding machine according to at least one of the preceding claims, where at least one of said mold carriers is stationary.

6. Blow-molding machine according to claim 5, where a blowing nozzle and/or a stretching rod and/or a pressure pad is provided on said stationary mold carrier.

7. Blow-molding machine according to at least one of the preceding claims, where at least two of said mold carriers can be simultaneously moved into a blowing position in which they together close a blow mold cavity.

8. Blow-molding machine according to at least one of the preceding claims, where at least two multi-carriers are provided being movable independently from one another.

9. Blow-molding machine according to claim 8, where said multi-carriers are mounted on individually driven vehicles that are driven in particular using a magnetic force coupling.

10. Blow-molding machine according to at least one of the claims 1 to 7, where at least two multi-carriers are provided being firmly coupled together and jointly driven.

11. Blow-molding machine according to at least one of the preceding claims, where adjacent blow mold halves are tilted by 180° relative to each other.

12. Blow-molding machine according to claim 1, where said multi-carrier is designed to carry at least three blow mold halves and is rotatably mounted and designed in particular as a planet gear for closing the different blow mold cavities.

13. Blow-molding machine according to at least one of the preceding claims, further comprising a locking device for locking said multi-carrier at at least one adjacent mold carrier.

14. Blow-molding machine according to at least one of the preceding claims, furthermore comprising a transfer device on which said double gripper for gripping a preform and a blowmolded container are provided.

15. Blow-molding machine according to at least one of the preceding claims, furthermore comprising a transfer device in which grippers for preforms and/or blow-molded containers are mounted on individually driven vehicles.

16. Blow-molding machine according to at least one of the preceding claims, where said blow mold halves have mutually corresponding parting planes on which two respective blow mold halves can be guided to one another and parting planes of said same multi-carrier are: arranged parallel to each other so that said associated blow mold halves face away from each other; or arranged towards each other under an angle ($\varphi$) equal to $180° * (x - 2) / x$, where x denotes the number of blow mold halves per multi-carrier.

17. Blow-molding machine according to at least one of the preceding claims, where said blow mold halves have parting planes corresponding to each other, on each of which two blow mold halves can be guided to one another, and said blow mold halves are each arranged on said multi-carriers in an unchanged position relative to each other, where, in particular, parting planes of said same multi-carrier include an angle ($\varphi$) with each other unequal to zero.

## Revendications

1. Machine de soufflage pour récipients ou contenants en matière plastique, comprenant plusieurs supports de moule pour supporter des moitiés de moule de soufflage, au moins deux des supports de moule étant réalisés en tant que supports multiples mobiles pour supporter simultanément au moins deux moitiés de moule de soufflage, qui sont associées à des cavités de soufflage différentes,
   **caractérisée en ce que**
   les supports multiples sont entraînés de manière telle qu'au moyen d'un mouvement continu des supports multiples, au moins l'une des cavités de soufflage puisse être ouverte et que simultanément au moins une autre des cavités de soufflage puisse être fermée.

2. Machine de soufflage selon la revendication 1, dans laquelle au moins un support de moule est monté de manière à pouvoir coulisser linéairement, pour simultanément fermer un premier groupe de cavités de soufflage et ouvrir un deuxième groupe de cavités de soufflage.

3. Machine de soufflage selon la revendication 1, dans laquelle les supports de moule sont montés rotatifs, pour simultanément fermer un premier groupe de cavités de soufflage et ouvrir un deuxième groupe de cavités de soufflage.

4. Machine de soufflage selon l'une au moins des revendications 1 à 3, dans laquelle les supports de moule sont réalisés en tant que supports doubles destinés à supporter deux moitiés de moule de soufflage d'orientation réciproque opposée.

5. Machine de soufflage selon l'une au moins des revendications précédentes, dans laquelle au moins l'un des supports de moule est stationnaire.

6. Machine de soufflage selon la revendication 5, dans laquelle sur le support de moule stationnaire est prévu une buse de soufflage et/ou une tige d'étirage et/ou un coussin de pression.

7. Machine de soufflage selon l'une au moins des revendications précédentes, dans laquelle au moins deux des supports de moule peuvent, dans une position de soufflage dans laquelle ils ferment en commun une cavité de soufflage, être déplacés simultanément.

8. Machine de soufflage selon l'une au moins des revendications précédentes, dans laquelle sont prévus au moins deux supports multiples, qui peuvent être déplacés indépendamment l'un de l'autre.

9. Machine de soufflage selon la revendication 8, dans laquelle les supports multiples sont montés sur des véhicules ou chariots entraînés individuellement, qui sont notamment entraînés au moyen d'un couplage de force magnétique.

10. Machine de soufflage selon l'une au moins des revendications 1 à 7, dans laquelle sont prévus au moins deux supports multiples, qui sont couplés de manière fixe l'un à l'autre et sont entraînés en commun.

11. Machine de soufflage selon l'une au moins des revendications précédentes, dans laquelle des moitiés de moule de soufflage voisines sont basculées de 180° l'une par rapport à l'autre.

12. Machine de soufflage selon la revendication 1, dans laquelle le support multiple est réalisé pour supporter au moins trois moitiés de moule de soufflage et est monté rotatif, et est notamment réalisé sous forme de roue planétaire ou satellite pour fermer les différentes cavités de soufflage.

13. Machine de soufflage selon l'une au moins des revendications précédentes, comprenant, en outre, un dispositif de verrouillage pour verrouiller les supports multiples à au moins un support de moule voisin.

14. Machine de soufflage selon l'une au moins des revendications précédentes, comprenant, en outre, un dispositif de transfert sur lequel sont prévus des préhenseurs doubles pour saisir une préforme et un récipient soufflé.

15. Machine de soufflage selon l'une au moins des revendications précédentes, comprenant, en outre, un dispositif de transfert dans lequel des préhenseurs pour des préformes et/ou des contenants soufflés sont montés sur des véhicules ou chariots entraînés individuellement.

16. Machine de soufflage selon l'une au moins des revendications précédentes, dans laquelle les moitiés de moule de soufflage présentent des plans de joints mutuellement correspondants contre lesquels peuvent être guidés respectivement deux moitiés de moule de soufflage, et des plans de joint du même support multiple sont agencés parallèlement les uns aux autres, de sorte que les moitiés de moule de soufflage associées sont orientées de manière mutuellement opposée, ou sont agencées en formant un angle ($\varphi$) égal à 180°* (x-2) /x, x étant le nombre des moitiés de moule par support multiple.

17. Machine de soufflage selon l'une au moins des revendications précédentes, dans laquelle les moitiés de moule de soufflage présentent des plans de joints mutuellement correspondants contre lesquels peuvent être guidés respectivement deux moitiés de moule de soufflage, et les moitiés de moule de soufflage sur les supports multiples sont agencées respectivement les unes par rapport aux autres dans une position restant identique, les plans de joint du même support multiple formant notamment entre eux un angle ($\varphi$) différent de zéro.

FIG. 1

EP 2 731 779 B1

FIG. 2

FIG. 3

EP 2 731 779 B1

FIG. 4

FIG. 5

FIG. 6

FIG. 7

EP 2 731 779 B1

FIG. 8

FIG. 9

FIG. 10

EP 2 731 779 B1

FIG. 11

101

102

104

104a

103

103a

2

23

FIG. 12

EP 2 731 779 B1

FIG. 13

FIG. 14

EP 2 731 779 B1

FIG. 15

FIG. 16

EP 2 731 779 B1

EP 2 731 779 B1

FIG. 17

FIG. 18

EP 2 731 779 B1

FIG. 19

EP 2 731 779 B1

FIG. 20

**IN DER BESCHREIBUNG AUFGEFÜHRTE DOKUMENTE**

**In der Beschreibung aufgeführte Patentdokumente**

- US 5975881 A
- EP 1226017 B1
- EP 1535719 B1
- DE 20007429
- DE 102009021792
- DE A1